# FASCICULE DE BREVET EUROPEEN

(11) **EP 1 670 651 B1**
(45) Date de publication et mention de la délivrance du brevet: **21.05.2008**
(21) Numéro de dépôt: 04787059.7
(22) Date de dépôt: 30.09.2004
(51) Int. Cl.: B60C 1/00, B60C 11/00

(54) **PNEUMATIQUE POUR ENGIN LOURD, BANDE DE ROULEMENT ET SON UTILISATION**
REIFEN FÜR SCHWERFAHRZEUGEN, LAUFFLÄCHE UND VERWENDUNG DAVON
TYRE FOR A HEAVY VEHICLE, TREAD, AND USE THEREOF

(30) Priorité: 30.09.2003 FR 0311467
(43) Date de publication de la demande: 21.06.2006
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Ferlin, Olivier, F-63200 Malauzat (FR)
(74) Mandataire: Le Cam, Stéphane Georges Elie
(86) Numéro de dépôt international: PCT/EP2004/010915
(87) Numéro de publication internationale: WO 2005/030500

(56) Documents cités:
- EP-A- 0 654 363
- EP-A- 0 969 040
- EP-A- 1 149 678
- US-A- 5 181 976

## Description

La présente invention concerne un pneumatique ou système équivalent, destiné à équiper un engin lourd de type poids-lourds, agricole ou génie civil, ledit pneumatique comprenant au moins une armature de carcasse surmontée radialement d'une bande de roulement.

De tels pneumatiques sont constitués d'une armature de carcasse habituellement surmontée radialement d'une armature de sommet, elle-même coiffée radialement d'une bande de roulement, ladite bande de roulement étant réunie à deux bourrelets par l'intermédiaire de deux flancs.

Il apparaît que l'utilisation de tels véhicules notamment dans le cas des applications agricole conduit à un écrasement des cultures. Le contact sol-véhicule se fait par l'intermédiaire de l'aire de contact du pneumatique sur le sol ; la pression exercée par la charge ainsi que les efforts tangentiels résultant de la transmission de couples freineur et moteur et d'efforts latéraux liés à la dynamique du véhicule sont effectivement susceptible d'endommager le sol par tassement, arrachement ou frottement.

La demande actuelle des utilisateurs est de diminuer les risques d'endommagements des cultures lors de l'utilisation sur des sols agraires du fait de l'écrasement desdites cultures lors du passage des véhicules et plus spécifiquement des pneumatiques.

Il est connu pour diminuer l'écrasement des sols de diminuer la pression des pneumatiques et/ou d'augmenter les dimensions des pneumatiques pour diminuer la pression au sol et donc l'écrasement. Il est ainsi possible d'obtenir des pressions au sol réduites à moins de 1 bar.

A ce niveau de pression, la rigidité structurelle du pneumatique n'est plus négligeable vis à vis de la rigidité pneumatique et de ce fait la répartition des pressions au sol n'est pas uniforme, les épaules du pneumatique portant plus que la bande de roulement. Ce phénomène d'inhomogénéité de la répartition des pressions sur l'aire de contact est accentué dès lors que le sol présente des irrégularités de surface.

Les nombreuses recherches effectuées par la demanderesse portant sur des modifications de profils méridiens de bande de roulement, de profils méridiens d'armature de carcasse, de matériaux d'armatures de carcasse et sommet, des modifications de dessin et dimensions de blocs de sculpture, n'ont pas apporté, à ce jour, les améliorations escomptées.

Il est par ailleurs connu d'utiliser des pneumatiques jumelés, ce qui peut permettre de limiter l'écrasement en réduisant la pression de chacun des pneumatiques tout en conservant la capacité de charge. Mais de telles solutions conduisent notamment à des problèmes d'encombrement.

Il est également connu d'utiliser des chenilles qui permettent encore de diminuer la pression moyenne exercée sur le sol par le véhicule.

Ce type de solutions peut permettre de répartir la charge sur une surface de contact plus importante et donc de réduire la pression qui s'exerce sur le sol. Par contre, dans le cas d'un sol présentant des irrégularités de surface telles que le contact ne peut être assuré qu'en quelques points proéminents, un pneumatique usuel ou une chenille usuelle conduit à des surpressions locales du fait de ces points.

Un but de l'invention est ainsi de fournir des pneumatiques ou systèmes équivalents pour engin de type poids-lourds qui permettent notamment de diminuer les endommagements du sol, notamment dus au compactage ou à l'écrasement du fait du passage de l'engin, quelle que soit la nature du sol et notamment dans le cas d'un sol meuble ou bien d'un sol présentant des irrégularités de surface.

Le pneumatique pour engin, conforme à l'invention, comprend une armature de carcasse surmontée radialement d'une armature de sommet, elle-même coiffée radialement d'une bande de roulement, ladite bande de roulement étant réunie à deux bourrelets par l'intermédiaire de deux flancs, ladite bande de roulement étant constituée au moins dans sa partie radialement extérieure d'un mélange élastomérique expansé de densité inférieure à 0,2 et de préférence voisine de 0,1.

On entend par « axiale » une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

On entend par « radiale » une direction perpendiculaire à l'axe de rotation du pneumatique et passant par cet axe de rotation. Cette direction peut être « radialement intérieure » ou « radialement extérieure » selon qu'elle se dirige vers l'axe de rotation ou vers l'extérieur du pneumatique.

L'axe de rotation du pneumatique est l'axe autour duquel il tourne en utilisation normale.

La direction circonférentielle du pneumatique, ou direction longitudinale, est la direction correspondant à la périphérie du pneumatique et définie par la direction de roulement du pneumatique. En tout point, elle est perpendiculaire aux directions radiales et axiales.

Un plan radial ou méridien est un plan qui contient l'axe de rotation du pneumatique.

Un plan circonférentiel est un plan perpendiculaire à l'axe de rotation du pneumatique.

Le plan médian circonférentiel ou plan équatorial est un plan perpendiculaire à l'axe de rotation du pneumatique et qui divise le pneumatique en deux moitiés.

Le pneumatique ainsi défini selon l'invention permet d'améliorer sensiblement la répartition de la pression qui s'exerce sur le sol au niveau de l'empreinte au sol du pneumatique.

Selon une réalisation préférée de l'invention, la dureté shore 00 du mélange élastomérique expansé est inférieure à 60 et de préférence inférieure à 55.

La dureté shore 00 est mesurée selon la norme ASTM D 2240.

De préférence encore, le mélange élastomérique expansé est une mousse à cellules fermées.

Le pneumatique selon l'invention ainsi défini permet de présenter des caractéristiques telles que sur des sols présentant des irrégularités, la bande de roulement dudit pneumatique présente une déformation autour de l'obstacle, ou irrégularité, ladite déformation étant localisée et limitée à la bande de roulement. En d'autres termes la rigidité de la bande de roulement très inférieure à celle de la structure du pneumatique autorise la déformation très localisée due à l'irrégularité du sol. Une telle réalisation permet ainsi de conserver une homogénéité satisfaisante de la répartition de la charge qui s'exerce au niveau de l'empreinte au sol sans observer de pic de surcharge trop important. En outre, le pneumatique ainsi défini et plus spécifiquement sa bande de roulement présente une déformation acceptable lorsqu'il est mis en précontrainte du fait de la charge appliquée à la roue.

Une réalisation particulièrement avantageuse de l'invention prévoit que le mélange élastomérique expansé est un butyle. Un tel matériau est par exemple décrit dans la demande de brevet européen EP 1 149 678.

Une variante avantageuse de l'invention prévoit que la partie radialement extérieure de la bande de roulement est recouverte d'un film protecteur. Un tel film protecteur est par exemple un film de type butyle non expansé. La fonction de protection recherchée concerne essentiellement les agressions du sol ; on choisit ainsi avantageusement un matériau de plus forte cohésion présentant notamment une résistance au déchirement. Le film protecteur peut encore avantageusement être choisi pour conférer d'autres types de protection, par exemple contre les rayonnements solaires, ou bien encore contre des agressions chimiques.

Une réalisation préférée de l'invention prévoit encore que la partie radialement extérieure de la bande de roulement est solidaire de la couche radialement intérieure directement à son contact. Ce résultat peut notamment être obtenu par collage de la bande de roulement sur une structure de base dudit pneumatique. La structure de base du pneumatique est par exemple un pneumatique réalisé au préalable sans bande de roulement ou tout au moins sans la partie radialement extérieure de la bande de roulement.

Les résultats des essais effectués ont montré que l'utilisation d'un pneumatique ainsi défini selon l'invention permet de diminuer les risques d'endommagement des cultures lors du roulage dans les champs, notamment du fait de la meilleure répartition de la pression au niveau de la surface de contact avec le sol.

L'invention propose encore une bande de roulement pour engin lourd constituée au moins dans sa partie radialement extérieure d'un mélange élastomérique expansé de densité inférieure à 0,2 et avantageusement voisine de 0,1.

Avantageusement encore, la dureté shore 00 du mélange élastomérique expansé est inférieure à 60 et de préférence inférieure à 55.

Comme énoncé précédemment, le mélange élastomérique expansé est une mousse à cellules fermées et par exemple un butyle.

Avantageusement encore, la partie radialement extérieure de la bande de roulement est recouverte d'un film protecteur.

L'invention propose également une utilisation d'une bande de roulement telle que décrite précédemment pour la réalisation d'un dispositif d'aide au déplacement tel qu'un pneumatique ou une chenille.

Selon un premier mode de réalisation, ladite bande de roulement est fixée par tout moyen connu de l'homme du métier tel qu'une colle à une structure de base dudit dispositif d'aide au déplacement.

Selon un second mode de réalisation, ladite bande de roulement est associée de façon non définitive à une structure de base dudit dispositif d'aide au déplacement. Selon un tel mode de réalisation, la bande de roulement peut être utilisée sous la forme d'un manchon ou chaussette qui est mis en place uniquement en cas de besoin. Une telle réalisation peut s'apparenter, quant à la mise en place, aux chaînes prévues pour la conduite sur la neige en ce qui concerne lés véhicules de tourisme.

Une telle réalisation concerne autant les pneumatiques que les chenilles, la bande de roulement venant alors recouvrir la bande de roulement du pneumatique qui peut être utilisé sans la dite bande de roulement selon l'invention.

Ces réalisations selon l'invention sont plus particulièrement adaptées à des structures de base de dispositifs d'aide au déplacement présentant une faible rigidité structurelle.

Plus particulièrement encore, une bande de roulement selon l'invention est prévue pour réaliser un dispositif d'aide au déplacement destiné à un véhicule lourd dont la pression de gonflage dudit dispositif d'aide au déplacement est inférieure à 0,3 b.

D'autres détails et caractéristiques avantageux de l'invention ressortiront de la description des essais réalisés et décrits ci-après.

Les essais réalisés ont été de deux types. Tout d'abord, des véhicules ont circulé sur un sol comportant des capteurs de type surfaciques permettant de mesurer la pression exercée par le pneumatique sur le sol. Ensuite, d'autres essais ont consisté à simuler un sol comportant des irrégularités et à mesurer la charge exercée sur une telle irrégularité par le pneumatique.

Les véhicules utilisés pour le test comportent des pneumatiques de dimension 710/70 R 34 gonflés à 0,2 b. Les pneumatiques sont réalisés selon l'invention et comportent une bande de roulement présentant radialement à l'extérieure une couche de 40 mm d'épaisseur réalisée en butyle expansé de densité égale à 0,1 et présentant une dureté shore 00 égale à 49.

Les essais ont également été réalisés sur des véhicules de référence équipés dé pneumatiques de même dimensions et gonflés à la même pression mais comportant une bande de roulement usuelle.

La charge radiale appliquée sur chaque pneumatique est de 1600 Kg.

Le premier essai a donc consisté à faire passer les véhicules sur un capteur surfacique et à mesurer la pression qui s'exerçait sur celui-ci.

Le véhicule de référence a mis en évidence des surpressions apparaissant au niveau des épaules du pneumatique par rapport au centre de la bande de roulement ; cette surpression aux épaules est d'environ 3 fois la pression au centre. Ces résultats confirment que la rigidité structurelle du pneumatique devient non négligeable pour les pressions de gonflage considérées.

Les résultats obtenus avec les pneumatiques selon l'invention ont montré que la pression restait inférieure à 0,4 b sur toute la largeur axiale de la bande de roulement, ce qui est tout à fait satisfaisant pour les applications visées.

Les seconds essais ont été réalisés par passage des véhicules sur des capteurs circulaires, de type plots, présentant une hauteur de 30 mm.

Les capteurs ont détecté une masse variant de 200 à 350 Kg selon qu'ils étaient placés au centre de la bande de roulement ou au niveau de l'épaule dans le cas des pneumatiques du véhicule de référence.

Dans le cas des pneumatiques selon l'invention, la charge mesurée par les capteurs a été inférieure à 80 Kg sur toute la largeur axiale de la bande de roulement.

La bande de roulement du pneumatique, ou d'un dispositif d'aide au déplacement, ainsi définie selon l'invention autorise une meilleure homogénéité de la pression dans la zone de l'aire de contact et autorise une atténuation des risques d'augmentation locale de pression en cas d'irrégularités sur le sol et permet donc d'utiliser des véhicules en diminuant les risques de dégradation du sol notamment par écrasement.

## Revendications

1. **-** Pneumatique pour engin lourd de type poids-lourds, agricole ou génie civil, comprenant une armature de carcasse surmontée radialement d'une armature de sommet, elle-même coiffée radialement d'une bande de roulement, ladite bande de roulement étant réunie à deux bourrelets par l'intermédiaire de deux flancs, **caractérisé en ce que** la bande de roulement est constituée au moins dans sa partie radialement extérieure d'un mélange élastomérique expansé de densité inférieure à 0,2 et **en ce que** la dureté shore 00 du mélange élastomérique expansé est inférieure à 60.

2. **-** Pneumatique selon la revendication 1, **caractérisé en ce que** le mélange élastomérique expansé est une mousse à cellules fermées.

3. **-** Pneumatique selon l'une des revendications 1 ou 2, **caractérisé en ce que** le mélange élastomérique expansé est un butyl.

4. - Pneumatique selon l'une des revendications 1 à 3, **caractérisé en ce que** la partie radialement extérieure de la bande de roulement est recouverte d'un film protecteur.

5. **-** Pneumatique selon l'une des revendications 1 à 4, **caractérisé en ce que** la partie radialement extérieure de la bande de roulement est solidaire de la couche radialement intérieure directement à son contact.

6. **-** Bande de roulement pour engin lourd, **caractérisé en ce qu'**elle est constituée au moines dans sa partie radialement extérieure d'un mélange élastomérique expansé de densité inférieure à 0,2 et **en ce que** la dureté shore 00 du mélange élastomérique expansé est inférieure à 60.

7. **-** Bande de roulement selon la revendication 6, **caractérisé en ce que** le mélange élastomérique expansé est une mousse à cellules fermées.

8. **-** Bande de roulement selon l'une des revendications 6 ou 7, **caractérisé en ce que** le mélange élastomérique expansé est un butyle.

9. **-** Bande de roulement selon l'une des revendications 6 à 8, **caractérisé en ce que** la partie radialement extérieure de la bande de roulement est recouverte d'un film protecteur.

10. **-** Utilisation d'une bande de roulement telle que décrite selon l'une des revendications 6 à 9 pour la réalisation d'un dispositif d'aide au déplacement tel qu'un pneumatique ou une chenille.

11. **-** Utilisation d'une bande de roulement selon la revendication 10, **caractérisé en ce que** ladite bande de roulement est fixée à une structure de base dudit dispositif d'aide au déplacement.

12. **-** Utilisation d'une bande de roulement selon la revendication 11, **caractérisé en ce que** ladite bande de roulement est associée de façon non définitive à une structure de base dudit dispositif d'aide au déplacement.

13. **-** Utilisation d'une bande de roulement selon l'une des revendications 11 ou 12, **caractérisé en ce que** la structure de base dudit dispositif d'aide au déplacement présente une faible rigidité Structurelle.

14. **-** Utilisation d'une bande de roulement selon l'une des revendications 10 à 13 pour réaliser un dispositif d'aide au déplacement destiné à un véhicule lourd dont la pression de gonflage dudit dispositif d'aide au déplacement est inférieure à 0,3 b.

## Claims

1. **-** Tyre for heavy equipment of the heavy-vehicle, agricultural or construction machinery type, comprising a carcass reinforcement surmounted radially by a crown reinforcement, itself covered radially by a tread, the said tread being connected to two beads by two sidewalls, **characterised in that** the tread consists, at least in its radially outward part, of an expanded elastomer mix with density less than 0.2 and **in that** the Shore 00 hardness of the expanded elastomer mix is lower than 60.

2. **-** Tyre according to Claim 1, **characterised in that** the expanded elastomer mix is a foam with closed cells.

3. **-** Tyre according to either of Claims 1 or 2, **characterised in that** the expanded elastomer mix is a butyl.

4. **-** Tyre according to any of Claims 1 to 3, **characterised in that** the radially outward part of the tread is covered by a protective film.

5. **-** Tyre according to any of Claims 1 to 4, **characterised in that** the radially outward part of the tread is firmly attached to the radially inward layer with which it is directly in contact.

6. **-** Tyre tread for heavy equipment, **characterised in that** it consists, at least in its radially outward part, of an expanded elastomer mix of density less than 0.2 and **in that** the Shore 00 hardness of the expanded elastomer mix is lower than 60.

7. **-** Tread according to Claim 6, **characterised in that** the expanded elastomer mix is a foam with closed cells.

8. **-** Tread according to either of Claims 6 or 7, **characterised in that** the expanded elastomer mix is a butyl.

9. - Tread according to any of Claims 6 to 8, **characterised in that** the radially outward part of the tread is covered by a protective film.

10. **-** Use of a tread such as that described in any of Claims 6 to 9 for making movement assisting means such as a tyre or a caterpillar track.

11. - Use of a tread according to Claim 10, **characterised in that** the said tread is fixed to a basis structure of the said movement assisting means.

12. **-** Use of a tread according to Claim 11, **characterised in that** the said tread is associated non-permanently with a basis structure of the said movement assisting means.

13. **-** Use of a tread according to either of Claims 11 or 12, **characterised in that** the basis structure of the said movement assisting means has a low structural rigidity.

14. **-** Use of a tread according to any of Claims 10 to 13 for making movement assisting means designed for a heavy vehicle in which the inflation pressure of the said movement assisting means is lower than 0.3 b.

## Patentansprüche

1. Reifen für eine schwere Maschine der Art Lastenfahrzeug, landwirtschaftliches Fahrzeug oder Hoch- und Tiefbaufahrzeug, umfassend eine Karkassenarmierung, die radial mit einer Kronenarmierung versehen ist, auf welche selbst radial eine Lauffläche aufgesetzt ist, wobei die Lauffläche mittels zwei Flanschen mit zwei Wülsten zusammengefügt ist, **dadurch gekennzeichnet, dass** die Lauffläche mindestens in ihrem radial äußeren Teil aus einer expandierten Elastomermischung zusammengesetzt ist, die eine Dichte von weniger als 0,2 aufweist, und dass die Shore-Härte 00 der expandierten Elastomermischung unter 60 liegt.

2. Reifen nach Anspruch 1, **dadurch gekennzeichnet, dass** die expandierte Elastomermischung ein Schaumstoff mit geschlossenen Poren ist.

3. Reifen nach einem der Ansprüche 1 oder 2, **dadurch gekennzeichnet, dass** die expandierte Elastomermischung ein Butyl ist.

4. Reifen nach einem der Ansprüche 1 bis 3, **dadurch gekennzeichnet, dass** der radial äußere Teil der Lauffläche mit einem Schutzfilm bedeckt ist.

5. Reifen nach einem der Ansprüche 1 bis 4, **dadurch gekennzeichnet, dass** der radial äußere Teil der Lauffläche mit der radial inneren Schicht in direktem Kontakt verbunden ist.

6. Lauffläche für eine schwere Maschine, **dadurch gekennzeichnet, dass** sie mindestens in ihrem radial äußeren Teil aus einer expandierten Elastomermischung mit einer Dichte unter 0,2 zusammengesetzt ist, und dass die Shore-Härte 00 der expandierten Elastomermischung unter 60 liegt.

7. Lauffläche nach Anspruch 6, **dadurch gekennzeichnet, dass** die expandierte Elastomermischung ein Schaumstoff mit geschlossenen Poren ist.

8. Lauffläche nach einem der Ansprüche 6 oder 7, **dadurch gekennzeichnet, dass** die expandierte Elastomermischung ein Butyl ist.

9. Lauffläche nach einem der Ansprüche 6 bis 8, **dadurch gekennzeichnet, dass** der radial äußere Teil der Lauffläche mit einem Schutzfilm bedeckt ist.

10. Benutzung einer wie nach einem der Ansprüche 6 bis 9 beschriebenen Lauffläche zur Durchführung einer Bewegungshilfsvorrichtung, wie etwa eines Reifens oder eines Raupenbands.

11. Benutzung einer Lauffläche nach Anspruch 10, **dadurch gekennzeichnet, dass** die Lauffläche an einer Grundstruktur der Bewegungshilfsvorrichtung befestigt ist.

12. Benutzung einer Lauffläche nach Anspruch 11, **dadurch gekennzeichnet, dass** die Lauffläche auf nicht definitive Weise mit einer Grundstruktur der Bewegungshilfsvorrichtung verbunden ist.

13. Benutzung einer Lauffläche nach einem der Ansprüche 11 oder 12, **dadurch gekennzeichnet, dass** die Grundstruktur der Bewegungshilfsvorrichtung eine geringe strukturelle Steifheit aufweist.

14. Benutzung einer Lauffläche nach einem der Ansprüche 10 bis 13 zur Durchführung einer Bewegungshilfsvorrichtung, die für ein schweres Fahrzeug bestimmt ist, wobei der Fülldruck der Bewegungshilfsvorrichtung unter 0,3 b liegt.
